# EUROPÄISCHE PATENTSCHRIFT

(11) **EP 1 285 181 B1**
(45) Veröffentlichungstag und Bekanntmachung des Hinweises auf die Patenterteilung: **02.01.2004**
(21) Anmeldenummer: 02735013.1
(22) Anmeldetag: 22.03.2002
(51) Int. Cl.: F16F 9/05

(54) **LUFTFEDERANORDNUNG**
PNEUMATIC-SUSPENSION ASSEMBLY
ENSEMBLE DE SUSPENSION PNEUMATIQUE

(30) Priorität: 17.04.2001 DE 10118727
(43) Veröffentlichungstag der Anmeldung: 26.02.2003
(73) Patentinhaber: Phoenix AG, 21079 Hamburg (DE)
(72) Erfinder: WEBER, Michael, 21244 Buchholz (DE); ROLEWICZ, Thomas, 21147 Hamburg (DE)
(86) Internationale Anmeldenummer: PCT/DE2002/001064
(87) Internationale Veröffentlichungsnummer: WO 2002/084142

(56) Entgegenhaltungen:
- DE-A- 10 050 028
- FR-A- 1 482 824

## Beschreibung

Die Erfindung betrifft eine Luftfederanordnung, bestehend wenigstens aus:
- einem Luftfederbalg aus elastomerem Werkstoff mit zwei Balgenden, der unter Bildung einer Schlaufe eine volumenelastische Luftkammer umschließt;
- einem Deckel mit einem ersten Anschlussbereich für das eine Balgende;
- einem Abrollkolben, der einen zweiten Anschlussbereich für das andere Balgende und ferner eine Abrollfläche für die Schlaufe aufweist; sowie
- einer Außenführung für den Luftfederbalg.

Eine gattungsgemäße Luftfederanordnung findet im Fahrzeugbau (PKW, Nutz- und Schienenfahrzeuge) eine breite Anwendung, wobei insbesondere auf die Druckschrift DE 100 01 018 A1 verwiesen wird.

Neben den oben genannten Grundbauteilen kann die Luftfederanordnung noch mit einem Schwingungsdämpfer (Stoßdämpfer) ausgestattet sein. Eine derartige Luftfederanordnung wird auch als Luftfederbein bezeichnet. Hinsichtlich des diesbezüglichen Standes der Technik wird insbesondere auf folgende Druckschriften verwiesen: DE 195 08 980 C2, DE 197 53 637 A1, DE 198 26 480 A1 und DE 100 50 028 A1.

In der Offenlegungsschrift DE 100 50 028 A1, Stand der Technik nach Artikel 54(3) EPÜ, wird ein Luftfederbein vorgestellt, bei dem im näheren Bereich der Anbindung des Luftfederbalges am Deckel ein gelenkiges Bauteil angebracht ist, das unter Druck Schwenkbewegungen zulässt, und zwar unter Bildung einer zweiten Schlaufe, die sich im wesentlichen in radialer Richtung erstreckt. Das gelenkige Bauteil umfasst dabei vorzugsweise ein umlaufendes Stützlager, das aus einem Werkstoff besteht, der neben der Gelenkfunktion auch eine Ausdehnungsbegrenzung gewährleistet.

Weiterhin offenbart das Dokument FR 14 82 824 eine Luftfederanordnung gemäß dem kennzeichnenden Teil des Anspruchs 1.

Im Rahmen einer Weiterentwicklung besteht nun die Aufgabe darin, eine Luftfederanordnung der gattungsgemäßen Art mit oder ohne Schwingungsdämpfer bereitzustellen, bei der neben einer sicheren Anbindung der Außenführung am Deckel auch eine große kardanische Auslenkung gewährleistet ist.

Gelöst wird diese Aufgabe gemäß Kennzeichen des Patentanspruches 1 dadurch, dass ein umlaufendes Faltenlager den Deckel mit der Außenführung verbindet und dabei den Luftfederbalg innerhalb dieses Verbindungsbereiches umschließt, wobei das Faltenlager folgende Bauteile umfasst:
- ein erstes Halteteil, das innerhalb des ersten Anschlussbereiches gemeinsam mit dem korrespondierenden Balgende am Deckel befestigt ist;
- ein zweites Halteteil, das wenigstens einen Teilbereich der Außenfläche der Außenführung fest umgreift; sowie
- ein Faltensystem, das zwischen dem ersten und zweiten Halteteil angeordnet ist, und das wenigstens eine erste und zweite Falte umfasst, die unter Ausbildung wenigstens einer Einschnürung nach innen gerichtet verlaufen, wobei sich der Luftfederbalg der Kontur der Einschnürung anpasst, wobei ferner innerhalb der Einschnürung ein Stützring einsitzt.

Zweckmäßige Ausgestaltungen der Erfindung sind in den Patentansprüchen 2 bis 12 genannt.

Die Erfindung wird nun anhand von Ausführungsbeispielen unter Bezugnahme auf schematische Zeichnungen erläutert. Es zeigen:
- Fig. 1: eine Luftfederanordnung mit den wesentlichen Grundbauteilen;
- Fig. 2: ein Faltenlager mit zwei Falten und einer Einschnürung;
- Fig. 3: ein Faltenlager mit vier Falten und zwei Einschnürungen.

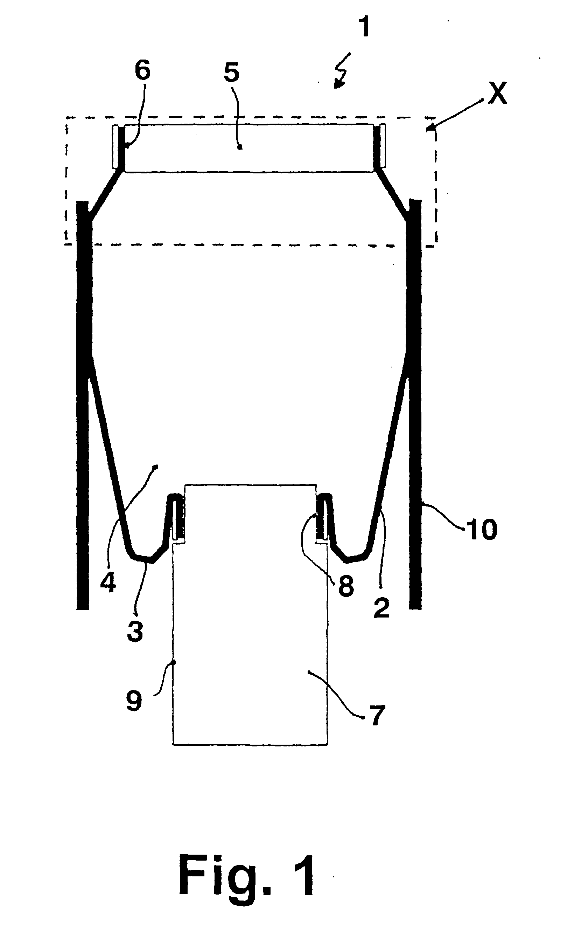

Fig. 1 zeigt eine Luftfederanordnung **1** mit den wesentlichen Grundbauteilen, nämlich Luftfederbalg **2**, Deckel **5** mit Anbindungsmöglichkeiten für die Karosserie, Abrollkolben **7** und Außenführung **10.** Der Deckel kann als Druckbehälter ausgebildet sein, gegebenenfalls in Verbindung mit einem Ventil (DE 198 19 642 A1).

Der Luftfederbalg **2** aus elastomerem Werkstoff ist zumeist mit einem eingebetteten Festigkeitsträger in Form eines Axialbalges (DE 36 43 073 A1) oder Kreuzlagenbalges (DE 29 04 522 A1) versehen. Die beiden Balgenden sind innerhalb der beiden Anschlussbereiche **6** und **8** an dem Deckel **5** bzw. Abrollkolben **7** befestigt, insbesondere mittels Klemmringen. Dadurch wird eine volumenelastische Luftkammer **4** gebildet. Bei der Einfederung entsteht eine Schlaufe **3**, die an der Abrollfläche **9** entlang gleiten kann. Zum Schutz dieser Schlaufe kann die Luftfederanordnung mit einer zusätzlichen Schutzmanschette ausgestattet sein. Eine Außenführung **10** stützt den Luftfederbalg, was insbesondere bei Verwendung eines Axialbalges von Bedeutung ist. Die gattungsgemäße Luftfederanordnung mit Außenführung kommt daher auch zumeist bei Einsatz eines Axialbalges zur Anwendung.

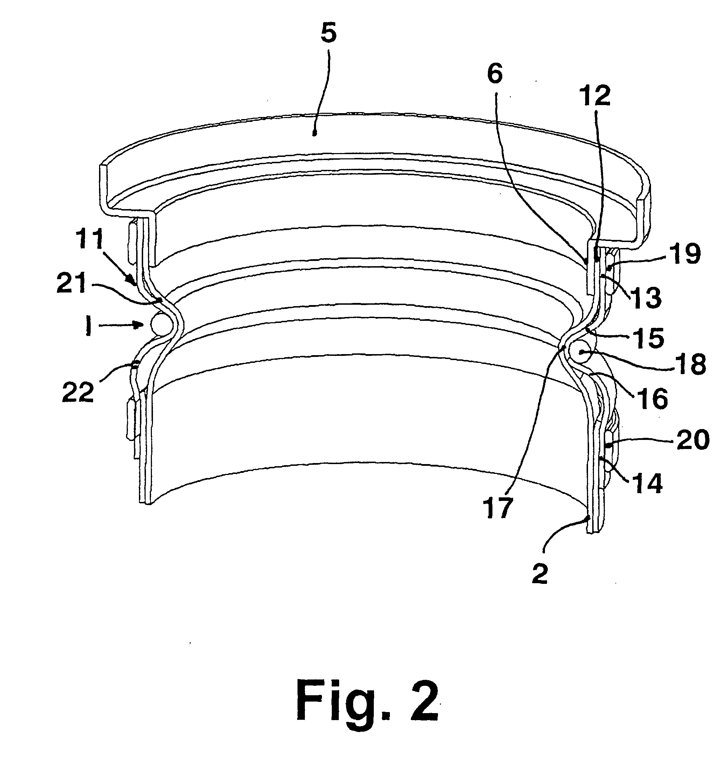

Der gestrichelte Bereich X, wo das Faltenlager den Deckel **5** mit der Außenführung **10** verbindet, wird nun anhand der beiden Fig. 2 bis 3 näher erläutert.

Fig. 2 zeigt ein umlaufendes Faltenlager **11**, das den Luftfederbalg **2** innerhalb des Verbindungsbereiches von Deckel **6** (hier mit Konturierung) und Außenführung **10** umschließt, und zwar im Sinne einer Kammerung. Das Faltenlager umfasst dabei folgende Bauteile:
- ein erstes Halteteil **13**, das innerhalb des ersten Anschlussbereiches **6** gemeinsam mit dem korrespondierenden Balgende **12** am Deckel **5** befestigt ist;
- ein zweites Halteteil **14**, das wenigstens einen Teilbereich der Außenfläche der Außenführung **10** fest umgreift; sowie
- ein Faltensystem I, das zwischen dem ersten und zweiten Halteteil angeordnet ist und eine erste Falte **15** und zweite Falte **16** umfasst, die unter Ausbildung einer einzigen Einschnürung **17** nach innen gerichtet verlaufen, wobei sich der Luftfederbalg **2** der Kontur der Einschnürung anpasst, wobei ferner innerhalb der Einschnürung ein Stützring **18** aus Metall oder Kunststoff einsitzt. Die beiden Falten gehen hier im Bereich der Einschnürunq bogenförmig ineinander über.

Das Faltenlager **11** besteht aus einem elastomerem Werkstoff oder einem thermoplastischen Elastomer, insbesondere in Verbindung mit einem eingebetteten Festigkeitsträger, insbesondere wiederum in Form von axial verlaufenden Fadenverstärkungen.

Alternativ hierzu kann das Faltenlager **11** aus einem textilen Werkstoff bestehen, vorzugsweise in Form eines Gewebes.

Innerhalb des ersten Anschlussbereiches **6** ist das erste Halteteil **13** des Faltenlagers und das korrespondierende Balgende **12** mittels eines gemeinsamen Klemmringes **19** am Deckel befestigt.

Das zweite Halteteil **14** des Faltenlagers ist mittels Verklebung und/oder eines Klemmringes **20** an der Außenführung **10** befestigt.

Der Luftfederbalg **2** und das Faltenlager **11** haben eine gemeinsame Kontaktfläche **21**, die vorzugsweise haftfrei ist, insbesondere in Verbindung mit wenigstens einer Entlüftungsbohrung **22**. Dabei ist es zweckmäßig, wenn jede Falte mit einer Entlüftungsbohrung versehen ist.

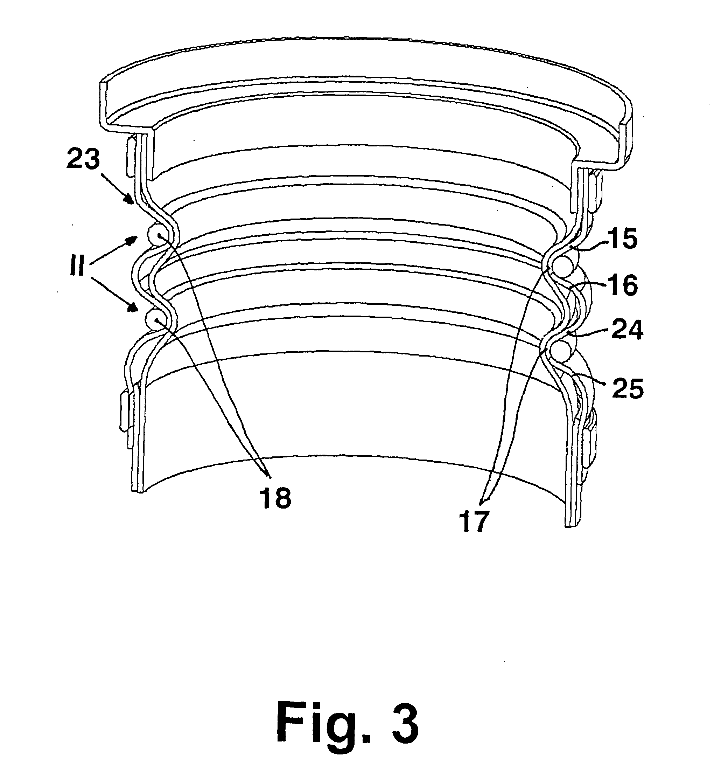

Fig. 3 zeigt ein umlaufendes Faltenlager **23** mit einem Faltensystem II, das zusätzlich eine dritte Falte **24** und vierte Falte **25** umfasst, wobei alle vier Falten einen im Wesentlichen wellenförmigen Verlauf annehmen, und zwar unter Ausbildung von zwei Einschnürungen **17**, wobei in jeder Einschnürung ein Stützring **18** einsitzt.

Hinsichtlich vorteilhafter Gestaltungsvarianten des Faltenlagers **23** wird auf das Faltenlager **11** gemäß Fig. 2 verwiesen.

### Bezugszeichenliste

- **1**: Luftfederanordnung
- **2**: Luftfederbalg
- **3**: Schlaufe (Rollfalte)
- **4**: volumenelastische Luftkammer
- **5**: Deckel (Druckbehälter)
- **6**: erster Anschlussbereich
- **7**: Abrollkolben (Tauchkolben)
- **8**: zweiter Anschlussbereich
- **9**: Abrollfläche
- **10**: Außenführung
- **11**: Faltenlager
- **12**: Balgende
- **13**: erstes Halteteil
- **14**: zweites Halteteil
- **15**: erste Falte
- **16**: zweite Falte
- **17**: Einschnürung
- **18**: Stützring
- **19**: Klemmring
- **20**: Klemmring
- **21**: Kontaktfläche zwischen Luftfederbalg und Faltenlager
- **22**: Entlüftungsbohrung
- **23**: Faltenlager
- **24**: dritte Falte
- **25**: vierte Falte
- I: Faltensystem mit zwei Falten
- II: Faltensystem mit vier Falten
- X: Faltenlagerbereich

## Patentansprüche

1. Luftfederanordnung (1), bestehend wenigstens aus:
- einem Luftfederbalg (2) aus elastomerem Werkstoff mit zwei Balgenden, der unter Bildung einer Schlaufe (3) eine volumenelastische Luftkammer (4) umschließt;
- einem Deckel (5) mit einem ersten Anschlussbereich (6) für das eine Balgende;
- einem Abrollkolben (7), der einen zweiten Anschlussbereich (8) für das andere Balgende und ferner eine Abrollfläche (9) für die Schlaufe (3) aufweist; sowie
- einer Außenführung (10) für den Luftfederbalg (2);
**dadurch gekennzeichnet, dass** ein umlaufendes Faltenlager (11, 23) den Deckel (5) mit der Außenführung (10) verbindet und dabei den Luftfederbalg (2) innerhalb dieses Verbindungsbereiches umschließt, wobei das Faltenlager folgende Bauteile umfasst:
- ein erstes Halteteil (13), das innerhalb des ersten Anschlussbereiches (6) gemeinsam mit dem korrespondierenden Balgende (12) am Deckel (5) befestigt ist;
- ein zweites Halteteil (14), das wenigstens einen Teilbereich der Außenfläche der Außenführung (10) fest umgreift; sowie
- ein Faltensystem (I, II), das zwischen dem ersten und zweiten Halteteil (13, 14) angeordnet ist und das wenigstens eine erste und zweite Falte (15, 16) umfasst, die unter Ausbildung wenigstens einer Einschnürung (17) nach innen gerichtet verlaufen, wobei sich der Luftfederbalg (2) der Kontur der Einschnürung anpasst, wobei ferner innerhalb der Einschnürung ein Stützring (18) einsitzt.

2. Luftfederanordnung nach Anspruch 1, **dadurch gekennzeichnet, dass** das Faltensystem (I) ausschließlich aus der ersten und zweiten Falte (15, 16) unter Ausbildung einer einzigen Einschnürung (17) besteht, wobei die beiden Falten im Bereich der Einschnürung bogenförmig ineinander übergehen.

3. Luftfederanordnung nach Anspruch 1, **dadurch gekennzeichnet, dass** das Faltensystem (II) zusätzlich eine dritte und vierte Falte (24, 25) umfasst, wobei alle vier Falten einen im Wesentlichen wellenförmigen Verlauf annehmen, und zwar unter Ausbildung von zwei Einschnürungen (17), wobei in jeder Einschnürung ein Stützring (18) einsitzt.

4. Luftfederanordnung nach einem der Ansprüche 1 bis 3, **dadurch gekennzeichnet, dass** das Faltenlager (11, 23) aus einem elastomeren Werkstoff oder einem thermoplastischen Elastomer besteht.

5. Luftfederanordnung nach Anspruch 4, **dadurch gekennzeichnet, dass** das Faltenlager (11, 23) einen eingebetteten Festigkeitsträger aufweist.

6. Luftfederanordnung nach Anspruch 5, **dadurch gekennzeichnet, dass** der Festigkeitsträger aus axial verlaufenden Fadenverstärkungen besteht.

7. Luftfederanordnung nach einem der Ansprüche 1 bis 3, **dadurch gekennzeichnet, dass** das Faltenlager (11, 23) aus einem textilen Werkstoff besteht, vorzugsweise in Form eines Gewebes.

8. Luftfederanordnung nach einem der Ansprüche 1 bis 7, **dadurch gekennzeichnet, dass** der Stützring (18) aus Metall oder Kunststoff besteht.

9. Luftfederanordnung nach einem der Ansprüche 1 bis 8, **dadurch gekennzeichnet, dass** innerhalb des ersten Anschlussbereiches (6) das erste Halteteil (13) des Faltenlagers (11, 23) und das korrespondierende Balgende (12) mittels eines gemeinsamen Klemmringes (19) am Deckel (5) befestigt ist.

10. Luftfederanordnung nach einem der Ansprüche 1 bis 9, **dadurch gekennzeichnet, dass** das zweite Halteteil (14) des Faltenlagers (11, 23) mittels Verklebung und/oder eines Klemmringes (20) an der Außenführung (10) befestigt ist.

11. Luftfederanordnung nach einem der Ansprüche 1 bis 10, **dadurch gekennzeichnet, dass** der Luftfederbalg (2) und das Faltenlager (12, 23) eine gemeinsame Kontaktfläche (21) haben, die haftfrei ist.

12. Luftfederanordnung nach einem der Ansprüche 1 bis 11, insbesondere nach Anspruch 11, **dadurch gekennzeichnet, dass** das Faltenlager (11, 23) wenigstens eine Entlüftungsbohrung (22) aufweist.

## Claims

1. Air spring arrangement (1), consisting at least of:
- an air spring bellows (2) made of elastomer material with two bellows ends, which, forming a loop (3), encloses an air chamber (4) of elastic volume,
- a cover (5) with a first connection area (6) for one bellows end,
- a rolling piston (7) which exhibits a second connection area (8) for the other bellows end and furthermore a rolling surface (9) for the loop (3), and
- an external guide (10) for the air spring bellows (2),
**characterised in that** a circumferential corrugated mounting (11, 23) connects the cover (5) to the external guide (10) and in the process encloses the air spring bellows (2) inside this connection area, the corrugated mounting comprising the following components:
- a first retaining part (13) which is fastened to the cover (5) inside the first connection area (6) together with the corresponding bellows end (12),
- a second retaining part (14) which grips securely around at least one part area of the external surface of the external guide (10), and
- a system of folds (I, II) which is arranged between the first and the second retaining part (13, 14) and which comprises at least a first and a second fold (15, 16) which run in an inward direction forming at least one constriction (17), the air spring bellows (2) matching the contour of the constriction and furthermore a supporting ring (18) being seated inside the constriction.

2. Air spring arrangement according to claim 1, **characterised in that** the system of folds (I) consists solely of the first and the second fold (15, 16) forming a single constriction (17), the two folds running into one another in a curve in the area of the constriction.

3. Air spring arrangement according to claim 1, **characterised in that** the system of folds (II) also comprises a third and a fourth fold (24, 25), all four folds adopting an essentially corrugated configuration, forming two constrictions (17), with a supporting ring (18) seated in each constriction.

4. Air spring arrangement according to one of claims 1 to 3, **characterised in that** the corrugated mounting (11, 23) is made of an elastomer material or a thermoplastic elastomer.

5. Air spring arrangement according to claim 4, **characterised in that** the corrugated mounting (11, 23) exhibits an embedded strength member.

6. Air spring arrangement according to claim 5, **characterised in that** the strength member consists of thread reinforcements running axially.

7. Air spring arrangement according to one of claims 1 to 3, **characterised in that** the corrugated mounting (11, 23) is made of a textile material, preferably in the form of a woven fabric.

8. Air spring arrangement according to one of claims 1 to 7, **characterised in that** the supporting ring (18) is made of metal or plastic.

9. Air spring arrangement according to one of claims 1 to 8, **characterised in that** inside the first connection area (6) the first retaining part (13) of the corrugated mounting (11, 23) and the corresponding bellows end (12) are fastened to the cover (5) by means of a common clamping ring (19).

10. Air spring arrangement according to one of claims 1 to 9, **characterised in that** the second retaining part (14) of the corrugated mounting (11, 23) is fastened to the external guide (10) by means of bonding and/or a clamping ring (20).

11. Air spring arrangement according to one of claims 1 to 10, **characterised in that** the air spring bellows (2) and the corrugated mounting (12, 23) have a common contact surface (21) which is free of adhesion.

12. Air spring arrangement according to one of claims 1 to 11, in particular according to claim 11, **characterised in that** the corrugated mounting (11, 23) exhibits at least one air outlet bore (22).

## Revendications

1. Ensemble de suspension pneumatique (1), composé d'au moins :
- un soufflet de suspension pneumatique (2), réalisé en matériau élastomère, avec deux extrémités de soufflet, entourant une chambre à air (4) à volume élastique, en formant une boucle (3) ;
- un couvercle (5) ayant une première zone de raccordement (6) pour une première extrémité de soufflet ;
- un piston à déroulement (7), qui présente une deuxième zone de raccordement (8) pour l'autre extrémité de soufflet et, en outre, une surface de déroulement (9) pour la boucle (3) ; et
- un guidage extérieur (10) pour le soufflet de suspension pneumatique (2) ;
**caractérisé en ce qu'**un support de pliage (11, 23) de pourtour relie le couvercle (5) au guidage extérieur (10) et entoure alors le soufflet de suspension pneumatique (2) à l'intérieur de cette zone de liaison, le support de pliage présentant les composants suivants :
- une première partie de maintien (13), fixée à l'intérieur de la première zone de raccordement (6), conjointement avec l'extrémité de soufflet correspondante, sur le couvercle (5) ;
- une deuxième partie de maintien (14), entourant fermement au moins une zone partielle de la surface extérieure du guidage extérieur (10) ; et
- un système de pliage (I, II) disposé entre la première et la deuxième partie de maintien (13, 14), et comprenant au moins un premier et un deuxième pli (15, 16), s'étendant, en étant orientés vers l'intérieur, en formant au moins un étranglement (17), le soufflet de suspension pneumatique (2) s'adaptant au contour de l'étranglement, un anneau d'appui (18) étant en outre monté à l'intérieur de l'étranglement.

2. Ensemble de suspension pneumatique selon la revendication 1, **caractérisé en ce que** le système de pliage (I) est formé exclusivement du premier et du deuxième pli (15, 16), en réalisant un étranglement (17) unique, les deux plis se transformant l'un en l'autre en forme d'arc dans la zone de l'étranglement.

3. Ensemble de suspension pneumatique selon la revendication 1, **caractérisé en ce que** le système de pliage (II) comprend en outre un troisième et un quatrième pli (24, 25), la totalité des quatre plis prenant une allure sensiblement ondulée et, précisément, en formant deux étranglements (17), un anneau d'appui (18) étant monté dans chaque étranglement.

4. Ensemble de suspension pneumatique selon l'une des revendications 1 à 3, **caractérisé en ce que** le support de pliage (11, 12) est formé d'un matériau élastomère ou bien d'un matériau thermoplastique.

5. Ensemble de suspension pneumatique selon la revendication 4, **caractérisé en ce que** le support de pliage (11, 23) présente un support de résistance intégré.

6. Ensemble de suspension pneumatique selon la revendication 5, **caractérisé en ce que** le support de résistance est formé de renforcements en fil, s'étendant axialement.

7. Ensemble de suspension pneumatique selon l'une des revendications 1 à 3, **caractérisé en ce que** le support de pliage (11, 23) est formé d'un matériau textile, de préférence sous la forme d'un tissu.

8. Ensemble de suspension pneumatique selon l'une des revendications 1 à 7, **caractérisé en ce que** l'anneau d'appui (18) est formé de métal ou de matière synthétique.

9. Ensemble de suspension pneumatique selon l'une des revendications 1 à 8, **caractérisé en ce que**, à l'intérieur de la première zone de raccordement (6), la première partie de maintien (13) du support de pliage (11, 23) et l'extrémité de soufflet (12) correspondante sont fixées sur le couvercle (5) à l'aide d'un anneau de serrage (19) commun.

10. Ensemble de suspension pneumatique selon l'une des revendications 1 à 9, **caractérisé en ce que** la deuxième partie de maintien (14) du support de pliage (11, 23) est fixée sur le guidage extérieur (10), par collage et/ou à l'aide d'un anneau de serrage (20).

11. Ensemble de suspension pneumatique selon l'une des revendications 1 à 10, **caractérisé en ce que** le soufflet de suspension pneumatique (2) et le support de pliage (12, 23) ont une face de contact (21) commune, qui est sans adhésion.

12. Ensemble de suspension pneumatique selon l'une des revendications 1 à 11, en particulier selon la revendication 11, **caractérisé en ce que** le support de pliage (11, 23) présente au moins un perçage de désaération (22).
